**Europäisches Patentamt**

**European Patent Office**

**Office européen des brevets**

(11) Veröffentlichungsnummer : **0 069 117**
**B1**

# (12) EUROPÄISCHE PATENTSCHRIFT

(45) Veröffentlichungstag der Patentschrift :
21.11.85

(21) Anmeldenummer : 82890094.4

(22) Anmeldetag : 25.06.82

(51) Int. Cl.⁴ : **H 01 M   6/52,  H 01 M  10/54,**
**C 22 B   4/00,  C 22 B  11/00,**
**C 22 B  17/00,  C 22 B  19/00,**
**C 22 B  43/00**

(54) **Verfahren zur Aufarbeitung von galvanischen Elementen.**

(30) Priorität : 30.06.81 AT 2911/81

(43) Veröffentlichungstag der Anmeldung :
05.01.83 Patentblatt 83/01

(45) Bekanntmachung des Hinweises auf die Patenterteilung : 21.11.85 Patentblatt 85/47

(84) Benannte Vertragsstaaten :
**CH DE FR IT LI**

(56) Entgegenhaltungen :
**CHEMICAL ABSTRACTS, Band 92, 1980, Seite 570,**
**Zusammenfassung Nr. 84895f, Columbus, Ohio (US)**
**ULLMANNS ENCYCLOPÄDIE DER TECHNISCHEN**
**CHEMIE, 4. Auflage, Band 9, 1980, Verlag Chemie,**
**Weinheim (DE), Seiten 54-56**
**ULLMANNS ENCYCLOPÄDIE DER TECHNISCHEN**
**CHEMIE, 4. Auflage, Band 19, 1980, Verlag Chemie,**
**Weinheim (DE), Seite 669**
**ULLMANNS ENCYCLOPÄDIE DER TECHNISCHEN**
**CHEMIE, 3. Auflage, Band 15, 1964, Urban &**
**Schwarzenberg, München - Berlin (DE)**

(73) Patentinhaber : **VOEST-ALPINE Aktiengesellschaft**
**Friedrichstrasse 4**
**A-1011 Wien (AT)**

(72) Erfinder : **Mörth, Wolfgang**
**Kienbergweg 2**
**A-8707 Leoben (AT)**
Erfinder : **Lazar, Gerhard**
**Leibnizstrasse 39**
**A-4020 Linz (AT)**
Erfinder : **Walter, Hans**
**Burggasse 12**
**A-8652 Kindberg/Aumühl (AT)**

(74) Vertreter : **Kretschmer, Adolf, Dipl.-Ing. et al**
**Patentanwälte Dipl.Ing. A. Kretschmer Dr. Thomas M.**
**Haffner Schottengasse 3a**
**A-1014 Wien (AT)**

Jouve, 18, rue St-Denis, 75001 Paris, France

## Beschreibung

Die Erfindung bezieht sich auf ein Verfahren zur Aufarbeitung von insbesondere gemischt anfallenden gebrauchten galvanischen Elementen, insbesondere Knopfzellen, worunter sich Quecksilber und/oder Cadmium enthaltende Hochleistungszellen befinden, bei welchem eine Säurebehandlung mit $HNO_3$ vorgesehen ist und die Flüssigkeit abfiltriert wird.

Derartige galvanische Elemente, insbesondere die sogenannten Knopfzellen, enthalten eine Reihe von Schwermetallen und insbesondere mehr oder minder giftige Metalle bzw. deren Salze, wie beispielsweise Quecksilber, Cadmium, Blei und Zink. Derartige Knopfzellen werden vor allen Dingen in Taschenrechnern, Uhren, Fotoapparaten und ähnlichen elektronischen Gebrauchsartikeln verwendet, und sind vor allen Dingen als Quecksilberoxyd/Zink-, Quecksilberoxyd/Cadmiumzellen oder Zellen mit Silberoxydelektroden mit unterschiedlichen Dimensionierungen gebräuchlich. Zumeist ist der Tausch dieser Zellen für den Nichtfachmann nicht ohne weiteres möglich, und es erfolgt daher das Einsetzen neuer Zellen in der Regel bei einem Fotohändler oder in einem Uhrengeschäft. Auf diese Weise ist prinzipiell die Möglichkeit sichergestellt, verbrauchte Zellen zu sammeln und gesondert vom üblichen Hausmüll zu halten.

Ein Verfahren der eingangs genannten Art ist in Chemical Abstracts, Band 92, 1980, Seite 570, Nr. 84895 f beschrieben. Ohne Berücksichtigung giftiger Elemente wird die Silberrückgewinnung aus Silberoxidzellen durch Lösen in $HNO_3$ vorgeschlagen.

Die Erfindung zielt nun darauf ab, bei der Aufarbeitung derartiger galvanischer Elemente die gefährlichen Stoffe abzutrennen, sowie die in derartigen Zellen enthaltenen wertvolleren Metalle wie Silber und Gold rückzugewinnen.

Zur Lösung dieser Aufgabe besteht die Erfindung im wesentlichen darin, daß die anfallenden Zellen thermisch oder mechanisch aufgeschlossen werden, wobei die Zellen zum thermischen Aufschluß einer thermischen Behandlung bei Temperaturen von 500 bis 600 °C, unter reduzierender Ofenatmosphäre unterworfen werden und Quecksilber als Destillat aufgefangen wird oder zum mechanischen Aufschluß auf Temperaturen von wenigstens − 150 °C unterkühlt und hierauf mechanisch zerkleinert werden, daß anschließend die Säurebehandlung mit verdünnter $HNO_3$ vorgenommen wird und Quecksilber durch Verdampfen oder Elektrolyse, Cadmium durch Elektrolyse und nach Abtrennen von ungelösten Bestandteilen Silber als AgCl gefällt und abgetrennt wird. Die Zellen sind üblicherweise dicht verschlossen, um ein Austreten des Elektrolyten mit Sicherheit zu vermeiden. Zur Aufarbeitung der Zellen wird daher in einem ersten Verfahrensschritt die Dichtung der Zellen thermisch oder mechanisch zerstört, um die gefährlichen oder wertvollen Rohstoffe, welche im Inneren der Zellen enthalten sind, abtrennen oder rückgewinnen zu können. Dieses Öffnen der Zellen erfolgt im Falle der thermischen Behandlung bei Temperaturen von 500 bis 600 °C, vorzugsweise 550 °C, unter reduzierender Ofenatmosphäre, wodurch es in diesem ersten Arbeitsgang bereits möglich ist, metallisches Quecksilber als Destillat aufzufangen. Die Öffnung der Zellen kann aber auch so erfolgen, daß die Zellen auf Temperaturen von wenigstens − 150 °C unterkühlt werden, wodurch das Metall der Zellen versprödet und ohne Gefahr einer Verdunstung von giftigen Substanzen mechanisch zerkleinert werden kann. In der Folge werden die geöffneten bzw. zerkleinerten Zellen mit verdünnter Säure versetzt, wodurch Lösungen gebildet werden, aus welchen die Schwermetalle in einfacher Weise durch Elektrolyse abgeschieden werden können.

Vorzugsweise erfolgt die saure Behandlung mit 10 %iger $HNO_3$. Die auf diese Weise gebildete Lösung enthält alle in Frage kommenden Schwermetalle mit Ausnahme von Gold, korrosionsfestem Stahl wie beispielsweise 18/8 Chrom-Nickel-Stahl und Kunststoffresten in Lösung, und kann in einfacher Weise aufgearbeitet werden.

Zur Beschleunigung der Auflösung erfolgt die Behandlung mit verdünntem $HNO_3$ bei Temperaturen von 80 bis 90 °C.

Die Abtrennung von Silber kann aus einer derartigen Salpetersäurelösung in einfacher Weise durch Fällung des Silbers als AgCl vorgenommen werden. Hiebei wird das Verfahren vorzugsweise so durchgeführt, daß die $HNO_3$-saure Lösung mit HCl und/oder NaCl versetzt wird, worauf der gebildete AgCl-Niederschlag abgefiltert, getrocknet und mit Borax, vorzugsweise im Verhältnis 1 : 1 versetzt wird, worauf die Reduktion zu Silber in einem Ofen bei Temperaturen von etwa 1 100 °C vorgenommen wird.

Der mit verdünnter Salpetersäure nicht in Lösung gebrachte Anteil, welcher neben korrosionsfestem Edelstahl, Gold und gegebenenfalls Kunststoff wie PVC enthält, kann in einfacher Weise so aufgearbeitet werden, daß durch Zusatz von Quecksilber das Gold als Amalgam abgetrennt wird.

Schließlich kann erfindungsgemäß die nach dem Abtrennen von AgCl verbleibende flüssige Lösung mit $CaCO_3$ und/oder CaO bis zu einem pH-Wert von etwa 5 neutralisiert werden, worauf die ausfallenden Schlämme abgetrennt und die flüssige Phase einer Gewinnungselektrolyse unterworfen werden. Für den Fall, daß das Quecksilber nicht bereits durch Destillation abgetrennt wurde, läßt sich in der nachfolgenden Elektrolyse neben Quecksilber auch noch Cadmium, Nickel und Zink in einfacher Weise abtrennen, wobei vorzugsweise nach der elektrolytischen Abtrennung von Cd, Ni, Zn und gegebenenfalls Hg

mit Ca(OH)$_2$ neutralisiert wird und der gebildete Schlamm mit dem vor der Elektrolyse gebildeten Schlamm vereinigt und gegebenenfalls aufgearbeitet wird.

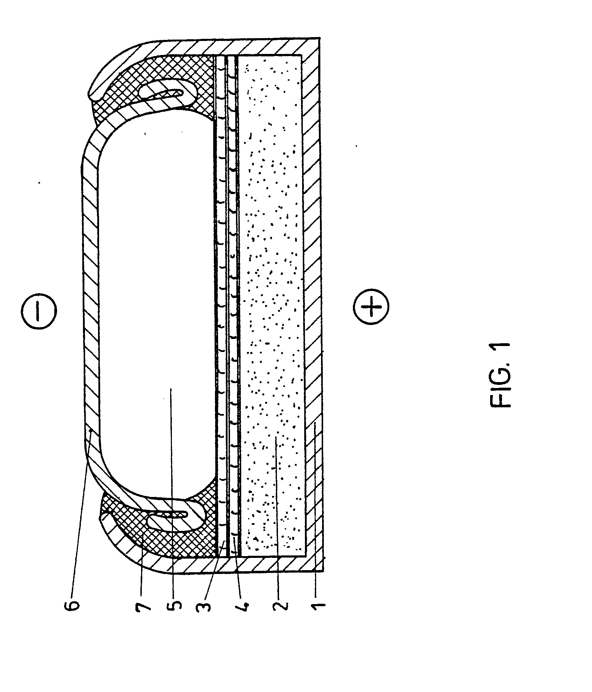

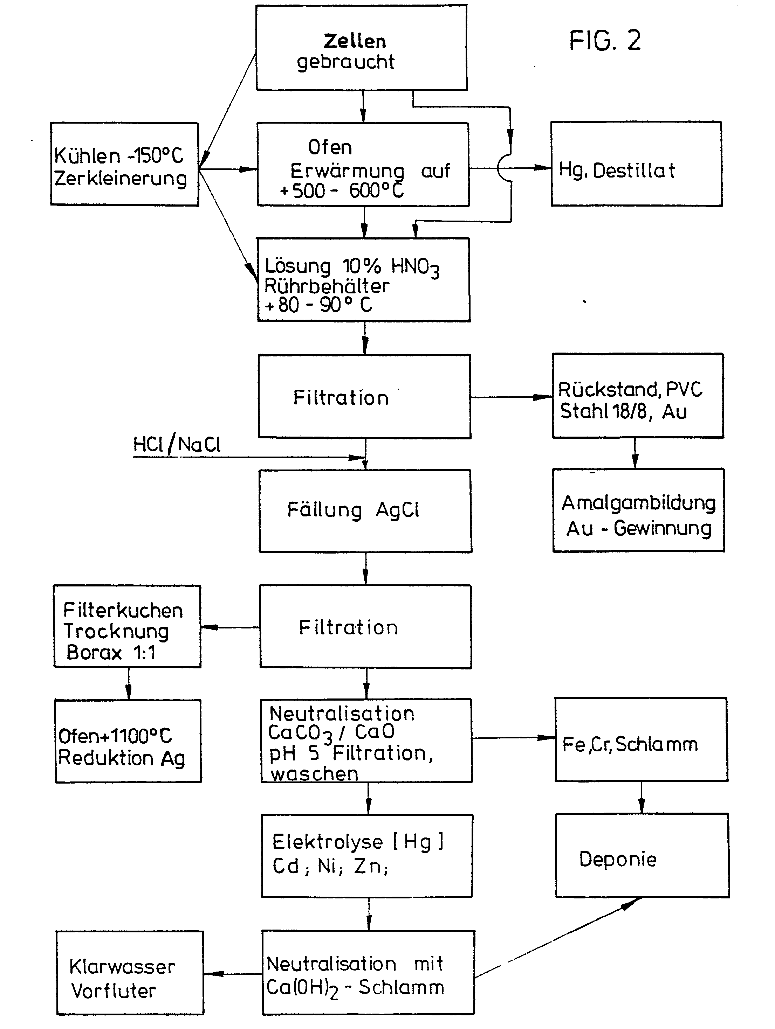

In der Zeichnung ist in Fig. 1 ein Beispiel einer Knopfzelle schematisch dargestellt. Das erfindungsgemäße Verfahren wird durch das Flußdiagramm gemäß Fig. 2 schematisch erläutert.

In Fig. 1 ist ein Gehäuse bzw. Zellennapf 1 dargestellt. Am Boden dieses Gehäuses befindet sich eine erste Elektrode 2, welche leitend mit dem Zellennapf 1 verbunden ist. Diese Elektrode 2 kann aus metallischem Quecksilber oder auch aus Silber bestehen, welches mit den jeweiligen oxydischen Verbindungen und anderen Metalloxyden wie beispielsweise Manganoxyd vermengt ist. Im Anschluß an die Elektrode 2 ist ein Diaphragma 3 vorgesehen, welches mit einem Elektrolyten 4 getränkt ist. Oberhalb des Diaphragmas 3 befindet sich die zweite Elektrode 5. Als Metall für diese zweite Elektrode 5 wird vor allen Dingen Zink oder Cadmium verwendet. Allgemein kommen eine Reihe von Metallen und deren Salze als Kathoden/Anoden-Paarung in Frage, die durch eine entsprechende Potentialdifferenz in der Lage sind, Strom zu liefern. Der Stromfluß wird hiebei durch den Elektrolyten 4 sichergestellt, der wechselweise durch das Diaphragma 3 diffundiert. Der Elektrolyt besteht zumeist aus Alkalien, wie beispielsweise aus Natrium- oder Kaliumhydroxyd in Wasser. Die Elektrode 5 wird durch einen Deckel 6 abgedeckt, welcher häufig an der Außenseite vergoldet ist, um einen guten Kontakt mit geringem Übergangswiderstand sicherzustellen. Zur Trennung des mit der positiven Elektrode 2 im Falle der dargestellten Knopfzelle leitend verbundenen Zellennapfes 1 vom Deckel 6, welcher leitend mit der negativen Elektrode verbunden ist, ist ein nicht leitender Dichtungsring 7 vorgesehen, welcher gleichzeitig für einen gas- und flüssigkeitsdichten Abschluß der Zelle sorgt. Als Material für die Dichtung finden Kunststoffe oder andere isolierende Materialien wie beispielsweise Bitumen Verwendung. Zellennapf 1 und Deckel 6 solcher Zellen bestehen häufig aus rostsicherem 18/8 Chrom-Nickel-Stahl. Es findet aber auch entsprechend plattiertes unlegiertes Eisenblech Verwendung.

Derartige Knopfzellen sind in zahlreichen Abwandlungen mit unterschiedlichen Elektrodenmetallen und unterschiedlichen Metallsalzen für den Elektrolyten bekannt.

Die Aufarbeitung derartiger Zellen ist in dem Flußdiagramm gemäß Fig. 2 schematisch näher erläutert. Die verbrauchten Zellen werden entweder bei Temperaturen von 500 bis 600 °C, insbesondere 550 °C, thermisch zerlegt, wobei Quecksilber als Destillat anfällt. Alternativ können die verbrauchten Zellen auf unter − 150 °C unterkühlt werden, worauf sie auf Grund der bei diesen Temperaturen großen Sprödigkeit der Metalle ohne nennenswerte Schwierigkeiten mechanisch zerkleinert werden können. Bei der thermischen Zersetzung der Zellen kann in einfacher Weise ein Drehrohrofen verwendet werden, in welchem eine reduzierende Ofenatmosphäre aufrecht erhalten wird. Eine derartige reduzierende Ofenatmosphäre kann beispielsweise dadurch sichergestellt werden, daß der Ofen direkt mit Erdgas in einem Verhältnis zu Luft von 1 : 7 beheizt wird. Durch die rasche Erwärmung der Knopfzellen in einem solchen Ofen, entsteht im Inneren der Zellen ein starker Überdruck. Mit der Erwärmung zugleich erweicht aber auch der Kunststoff, der als Dichtungsring die Zellen abdichtet. Dadurch kommt es zu einem Auseinanderplatzen der Zellen. Die Verbrennungsgase, die durch die Direktbeheizung im Ofen entstehen, enthalten zugleich Quecksilber als Dampf und werden abgesaugt. Diese werden durch einen entsprechenden Kühler geleitet, wobei das Quecksilber quantitativ als Metall ausfällt. Geringe, gegebenenfalls vorhandene Mengen an nicht kondensierten Quecksilberdämpfen werden durch ein entsprechendes Filter zurückgehalten. Das Gemenge von offenen Zellen, die frei von Quecksilber sind, fällt durch eine Gasschleuse in ein Rührgefäß, wobei sie mit Salpetersäure 10 %, Temperaturen von 80-90 °C, unter ständigem Rühren versetzt werden. Dabei gehen Silber und auch andere Metalle, wie z. B. Zinn, Cadmium, Eisen usw. als Nitrate in Lösung. Die Gehäuse oder auch Deckel, die oft aus rostsicherem Stahl gefertigt sind, werden dabei blankgebeizt aber nicht aufgelöst. Im nicht aufgelösten Rückstand befindet sich auch Gold. Dieses kann mit Quecksilber durch Amalgambildung rückgewonnen werden.

Im Falle der mechanischen Zerkleinerung der Zellen enthält die salpetersaure Lösung das in diesem Fall noch nicht abgetrennte Quecksilber in Lösung.

Anschließend wird die Lösung abgekühlt und filtriert, wobei nicht aufgelöste Teile abgetrennt werden. Diese können als legierter Schrott verwertet werden. Die Metallsalzlösung wird mit Salzsäure bzw. Natriumchloridlösung im Überschuß versetzt, wobei das Silber als Silberchlorid ausfällt. Dieses wird durch eine Filterpresse abgetrennt und anschließend getrocknet. Sodann wird der getrocknete Filterkuchen mit Borax im Verhältnis 1 : 1 und etwas gemahlener Holzkohle vermengt. Anschließend wird das Gemenge in einem Tiegelofen auf ca. 1 100 °C erhitzt und das reduzierte Silber abgegossen. Das stark saure Filtrat wird mit Kalziumkarbonat in einem Rührgefäß bis pH 5 neutralisiert. Eisen, Chrom, Aluminium, Mangan, fallen dabei als Hydroxidschlämme aus und können als neutraler Schlamm abgepreßt und deponiert werden. In der Lösung verbleiben Cadmium und Nickel. Diese Metalle können durch eine Elektrolyseanlage wiedergewonnen werden.

Im Falle der mechanischen Zerkleinerung der Zellen enthält die der Elektrolyse zugeführte Lösung auch noch Quecksilber, welches in diesem Fall elektrolytisch abgeschieden werden kann.

Nach der Elektrolyse kann erforderlichenfalls weiter neutralisiert werden, worauf nach erfolgter Klärung das Wasser in den Vorfluter geleitet werden kann. Die Schlämme werden abgepreßt und können verhaldet werden.

**Patentansprüche**

1. Verfahren zur Aufarbeitung von insbesondere gemischt anfallenden gebrauchten galvanischen Elementen, insbesondere Knopfzellen, worunter sich Quecksilber und/oder Cadmium enthaltende Hochleistungszellen befinden, bei welchem eine Säurebehandlung mit $HNO_3$ vorgesehen ist und die Flüssigkeit abfiltriert wird, dadurch gekennzeichnet, daß die anfallenden Zellen thermisch oder mechanisch aufgeschlossen werden, wobei die Zellen zum thermischen Aufschluß einer thermischen Behandlung bei Temperaturen von 500 bis 600 °C unter reduzierender Ofenatmosphäre unterworfen werden und Quecksilber als Destillat aufgefangen wird oder zum mechanischen Aufschluß auf Temperaturen von wenigstens − 150 °C unterkühlt und hierauf mechanisch zerkleinert werden, daß anschließend die Säurebehandlung mit verdünnter $HNO_3$ vorgenommen wird und Quecksilber durch Verdampfen oder Elektrolyse, Cadmium durch Elektrolyse und nach Abtrennen von ungelösten Bestandteilen Silber als AgCl gefällt und abgetrennt wird.

2. Verfahren nach Anspruch 1, dadurch gekennzeichnet, daß die Säurebehandlung mit 10 %iger $HNO_3$ vorgenommen wird.

3. Verfahren nach Anspruch 1, dadurch gekennzeichnet, daß die thermische Behandlung bei 550 °C vorgenommen wird.

4. Verfahren nach einem der Ansprüche 1 bis 3, dadurch gekennzeichnet, daß die Säurebehandlung mit verdünntem $HNO_3$ bei Temperaturen von 80 bis 90 °C vorgenommen wird.

5. Verfahren nach einem der Ansprüche 1 bis 4, dadurch gekennzeichnet, daß aus dem nach der Säurebehandlung in verdünnter $HNO_3$ verbleibenden Rückstand, welcher neben korrosionsfestem Edelstahl, Gold und gegebenenfalls Kunststoffe wie PVC enthält, durch Zusatz von Quecksilber das Gold als Amalgam abgetrennt wird.

6. Verfahren nach einem der Ansprüche 1 bis 5, dadurch gekennzeichnet, daß die durch die Säurebehandlung gewonnene $HNO_3$-saure Lösung mit HCl und/oder NaCl versetzt wird, worauf der gebildete AgCl Niederschlag abgefiltert, getrocknet und mit Borax, vorzugsweise im Verhältnis 1 : 1 versetzt wird, worauf die Reduktion zu Silber in einem Ofen bei Temperaturen von etwa 1 100 °C vorgenommen wird.

7. Verfahren nach Anspruch 6, dadurch gekennzeichnet, daß die nach dem Abfiltrieren von AgCl verbleibende flüssige Lösung mit $CaCO_3$ und/oder CaO bis zu einem pH-Wert von etwa 5 neutralisiert wird, worauf die ausfallenden Schlämme abgetrennt und die flüssige Phase einer Gewinnungselektrolyse unterworfen werden.

8. Verfahren nach Anspruch 7, dadurch gekennzeichnet, daß nach der elektrolytischen Abtrennung von Cd, Ni, Zn und gegebenenfalls Hg mit $Ca(OH)_2$ neutralisiert wird und der gebildete Schlamm mit dem vor der Elektrolyse gebildeten Schlamm vereinigt wird.

**Claims**

1. Process for the recovery of spent electrochemical cells, particularly mixed kinds and particularly button cells, among which there are included high energy cells containing mercury and/or cadmium, comprising an acid treatment with $HNO_3$ and filtering the liquid, characterised in that the delivered cells are disintegrated thermally or mechanically, wherein for thermal disintegration the cells are treated at temperatures of from 500 to 600 °C in a reducing furnace atmosphere and mercury is collected as distillate, or for mechanical disintegration the cells are supercooled to at least − 150 °C and thereafter are crushed mechanically, that thereupon the acid treatment is carried out with diluted $HNO_3$ and mercury is separated by evaporation or electrolysis, cadmium is separated by electrolysis and, after separation of undissolved matter, silver is precipitated in the form of AgCl and separated.

2. Process as claimed in claim 1, characterised in that the acid treatment is carried out which a 10 percent solution of $HNO_3$.

3. Process as claimed in claim 1, characterised in that the thermal treatment is carried out at 550 °C.

4. Process as claimed in any one of claims 1 to 3, characterised in that the acid treatment with diluted $HNO_3$ is carried out at temperatures of from 80 to 90 °C.

5. Process as claimed in any one of claims 1 to 4, characterised in that from the residue remaining after the acid treatment in diluted $HNO_3$, which, besides non-corrosive special steel, contains gold and may contain plastics materials such as PVC, gold is separated in the form of amalgam by adding mercury.

6. Process as claimed in any one of claims 1 to 5, characterised in that the $HNO_3$-acidic solution obtained by the acid treatment is mixed with HCl and/or NaCl, whereupon the formed precipitation of AgCl is filtered, dried and mixed with borax, preferably in a 1 : 1 ratio, and thereafter the reduction to silver is carried out in a furnace at temperatures of about 1 100 °C.

7. Process as claimed in claim 6, characterised in that the liquid solution remaining after filtering of AgCl is neutralised to pH of about 5 with $CaCO_3$ and/or CaO, whereupon precipitating sludges are separated and the liquid phase is subjected to a recovery electrolysis.

8. Process as claimed in claim 7, characterised in that after electrolytic separation of Cd, Ni, Zn and, if desired, Hg neutralisation is carried out with $Ca(OH)_2$ and the developed sludge is combined with the sludge developed prior to the electrolysis.

## Revendications

1. Procédé de retraitement d'éléments galvaniques usés, en particulier se présentant à l'état mélangé, en particulier de piles rondes, parmi lesquelles se trouvent des piles de grande puissance contenant du mercure et/ou du cadmium, dans lequel il est prévu un traitement acide par $HNO_3$ et l'on sépare le liquide par filtration, caractérisé par le fait que l'on ouvre thermiquement ou mécaniquement les piles qui se présentent, les piles étant soumises pour l'ouverture thermique à un traitement thermique à des températures de 500 à 600 °C sous atmosphère réductrice, du mercure étant capté comme distillat, ou les piles étant surrefroidies pour l'ouverture mécanique à des températures d'au moins – 150 °C et ensuite fragmentée mécaniquement, qu'ensuite on opère le traitement acide par $HNO_3$ dilué et que l'on sépare le mercure par évaporation ou électrolyse, le cadmium par électrolyse et qu'après avoir séparé l'argent des constituants non dissous, on le précipite sous forme d'AgCl et on le sépare.

2. Procédé selon la revendication 1, caractérisé par le fait que l'on effectue le traitement acide avec $HNO_3$ à 10 %.

3. Procédé selon la revendication 1, caractérisé par le fait que l'on effectue le traitement thermique à 550 °C.

4. Procédé selon l'une des revendications 1 à 3, caractérisé par le fait que l'on effectue le traitement acide avec $HNO_3$ dilué à des températures de 80 à 90 °C.

5. Procédé selon l'une des revendications 1 à 4, caractérisé par le fait que du résidu restant après le traitement acide dans $HNO_3$ dilué, qui contient, outre de l'acier inoxydable résistant à la corrosion, de l'or et éventuellement des matières synthétiques comme le PCV, on sépare l'or sous forme d'amalgame par addition de mercure.

6. Procédé selon l'une des revendications 1 à 5, caractérisé par le fait qu'à la solution acidifiée par $HNO_3$, obtenue par le traitement acide, on ajoute HCl et/ou NaCl, après quoi on sépare par filtration le précipité d'AgCl formé, on le sèche et on y ajoute du borax, de préférence en un rapport de 1 : 1, après quoi on effectue la réduction en argent dans un four, à des températures d'environ 1 100 °C.

7. Procédé selon la revendication 6, caractérisé par le fait que l'on neutralise par $CaCO_3$ et/ou CaO la solution liquide restant après séparation d'AgCl par filtration, jusqu'à un pH d'environ 5, après quoi on sépare les boues précipitées et on soumet la phase liquide à une électrolyse d'extraction.

8. Procédé selon la revendication 7, caractérisé par le fait qu'après la séparation électrolytique de Cd, Ni, Zn et éventuellement Hg, on neutralise par $Ca(OH)_2$ et on réunit la boue formée à la boue formée avant l'électrolyse.

FIG. 1

0 069 117

FIG. 2

```
                    ┌─────────────────┐
                    │    Zellen       │
                    │   gebraucht     │
                    └─────────────────┘
                             │
┌──────────────────┐  ┌─────────────────┐        ┌──────────────────┐
│ Kühlen -150°C    │→ │     Ofen        │───────→│  Hg. Destillat   │
│ Zerkleinerung    │  │ Erwärmung  auf  │        └──────────────────┘
└──────────────────┘  │ +500 - 600°C    │
                      └─────────────────┘
                             │
                    ┌─────────────────┐
                    │ Lösung 10% HNO3 │
                    │ Rührbehälter    │
                    │ +80 - 90° C     │
                    └─────────────────┘
                             │
                    ┌─────────────────┐        ┌──────────────────┐
                    │   Filtration    │───────→│ Rückstand, PVC   │
                    └─────────────────┘        │ Stahl 18/8, Au   │
                             │                 └──────────────────┘
   HCl / NaCl ────────→      │                          │
                    ┌─────────────────┐        ┌──────────────────┐
                    │  Fällung AgCl   │        │ Amalgambildung   │
                    └─────────────────┘        │ Au - Gewinnung   │
                             │                 └──────────────────┘
┌──────────────────┐  ┌─────────────────┐
│ Filterkuchen     │← │   Filtration    │
│ Trocknung        │  └─────────────────┘
│ Borax 1:1        │           │
└──────────────────┘           │
        │         ┌─────────────────┐        ┌──────────────────┐
┌──────────────────┐│ Neutralisation  │───────→│ Fe,Cr,Schlamm    │
│ Ofen+1100°C      ││ CaCO3 / CaO     │        └──────────────────┘
│ Reduktion Ag     ││ pH 5 Filtration,│                 │
└──────────────────┘│ waschen         │        ┌──────────────────┐
                    └─────────────────┘        │   Deponie        │
                             │                 └──────────────────┘
                    ┌─────────────────┐
                    │ Elektrolyse [Hg]│
                    │ Cd; Ni; Zn;     │
                    └─────────────────┘
                             │
┌──────────────────┐  ┌─────────────────┐
│ Klarwasser       │← │ Neutralisation  │
│ Vorfluter        │  │ mit Ca(OH)2-    │
└──────────────────┘  │ Schlamm         │
                      └─────────────────┘
```